# EUROPEAN PATENT SPECIFICATION

(11) **EP 1 023 345 B1**
(45) Date of publication and mention of the grant of the patent: **27.11.2002**
(21) Application number: 98956837.3
(22) Date of filing: 23.09.1998
(51) Int. Cl.: C08F 216/14, C08F 226/00

(54) **RESINS FROM N-ALKENYL AMIDES AND ALLYLIC MONOMERS**
HARZE VON N-ALKENYL AMIDEN UND ALLYL MONOMERE
RESINES D'AMIDES DE N-ALCENYLE ET DE MONOMERES D'ALLYLE

(30) Priority: 15.10.1997 US 950447
(43) Date of publication of application: 02.08.2000
(73) Proprietor: ARCO Chemical Technology, L.P., Greenville, Delaware 19807 (US)
(72) Inventor: GUO, Shao-Hua, West Goshen, PA 19380 (US); ADAMCHUK, Mark, R., West Chester, PA 19382 (US); KESLING, Haven, S., Jr., Drexel Hill, PA 19026 (US); BRAUNSTEIN, David, M., Berwyn, PA 19314 (US)
(74) Representative: Colmer, Stephen Gary
(86) International application number: EP9806061
(87) International publication number: WO99019374

(56) References cited:
- US-A- 3 149 091
- US-A- 5 382 642
- US-A- 5 475 073

## Description

### FIELD OF THE INVENTION

The invention relates to copolymer resins derived from N-alkenyl amides and allylic monomers. The resins are useful in many applications, including coatings, inks, adhesives, elastomers, foams, surfactants, plasticizers, and polymer composites.

### BACKGROUND OF THE INVENTION

Copolymers derived from allylic monomers such as allyl alcohol, allyl esters, and alkoxylated allylic alcohols are valuable for coatings, inks, adhesives, and other thermosets. For example, copolymers of allyl alcohol or propoxylated allyl alcohols with styrene (see, e.g., U.S. Pat. Nos. 5,382,642 and 5,451,631), allyl esters (e.g., U.S. Pat. Nos. 5,480,954 and 5,543,483), or acrylates (e.g., U.S. Pat. Nos. 5,475,073 and 5,525,693) are relatively low molecular weight resins that are useful for melamine, polyurethane, and alkyd coatings. Copolymer resins from allylic monomers are generally quite soluble in organic solvents, but are not very soluble in water. Water solubility is often imparted to the resins by incorporating an acid-functional monomer such as acrylic or methacrylic acid. Neutralization of the resin with a base enhances its water solubility. Unfortunately, undesirably large amounts of acrylic acids are often needed for adequate water solubility of the resin. In addition, neutralization of resins, while improving water solubility, can adversely impact coating appearance and resistance of the coating to staining and moisture.

N-alkenyl amides, particularly N-vinyl-lactams such as N-vinylpyrrolidone and N-vinylcaprolactam, homopolymerize to give water-soluble polymers that are valuable for cosmetics, dispersants. flocculants, papermaking chemicals, textiles, pharmaceuticals, and polymer composites. In polymer composites, for example, poly(N-vinylpyrrolidone) can be used as an intercalant polymer for making nanocomposites, which comprise a thermoplastic orthermoset matrix polymer, a layered inorganic material such as a clay, and the intercalant polymer. The poly(N-vinylpyrrolidone) penetrates the layers of inorganic material and helps it exfoliate when combined with the matrix polymer. Because poly(N-vinylpyrrolidone) is relatively expensive, however, alternative intercalant polymers are of interest.

New copolymer resins are needed. Preferably, the resins would offer a less-expensive alternative to the N-alkenyl amide resins now available. Preferably, the resins would offer the advantages of allylic resins (such as hydroxyl functionality), but would have greater hydrophilicity and would give coatings with improved appearance and physical properties. Ideally, the copolymer resins would be valuable in a wide variety of applications, including coatings, inks, adhesives, elastomers, foams, and polymer composites.

### SUMMARY OF THE INVENTION

The invention is a copolymer resin. The resin comprises recurring units of an N-alkenyl amide and one or more allylic monomers selected from allyl esters, allyl ethers, and alkoxylated allylic alcohols. Optionally, the resin includes recurring units of one or more other ethylenic monomers. The resins are easily produced without need for reaction solvents to control rate of polymerization and without need for chain-transfer agents to limit molecular weight.

Resins of the invention offer valuable advantages for thermoset coatings, sealants, elastomers, adhesives, and foams, as well as for composite materials made using the resins. In composites, the resins offer good performance in a less-expensive alternative to commercially available intercalants such as poly(N-vinylpyrrolidone). In coatings and other thermoset applications, the resins offer oil resistance, enhanced hydrophilicity, and a reduced dependence on salt content for water solubility.

### DETAILED DESCRIPTION OF THE INVENTION

Copolymer resins of the invention comprise recurring units of an N-alkenyl amide, an allylic monomer, and optionally, an ethylenic monomer.

N-alkenyl amides useful in the invention are compounds that have a substituted or unsubstituted carbon-carbon double bond attached directly to nitrogen of an amide. Preferred N-alkenyl amides have the general structure: R₁-(C=O)-NR₂-C(R₃)=C(R₄)R₅ in which each of R₁, R₂, R₃, R₄, and R₅ separately represents a member selected from the group consisting of hydrogen and C₁-C₆ alkyl. R₁ and R₂ may form a ring to give an alkenyllactam. Suitable alkenyl amides include, for example, N-vinylformamide, N-vinyl-N-methylacetamide, N-vinyl-N-methylpropanamide, and the like, and mixtures thereof. Other suitable N-alkenyl amides are described in U.S. Pat. Nos. 5,622,533 and 5,625,076. the teachings of which are incorporated herein by reference.

Preferred N-alkenyl amides include N-vinyl-lactams, which are cyclic amides that have a vinyl group (CH₂=CH-) attached to the nitrogen atom of the amide moiety. The lactam preferably has from 4 to 10 ring atoms. More preferably, the lactam has from 5 to 7 ring atoms. Suitable N-vinyl-lactams include, for example, N-vinylpropiolactam, N-vinylpyrrolidone, N-vinylvalerolactam, N-vinylcaprolactam and mixtures thereof. N-vinylpyrrolidone and N-vinylcaprolactam are particularly preferred.

In addition to or in place of the N-alkenyl amide, resins of the invention can incorporate recurring units of an acrylate-functionalized pyrrolidone. Suitable acrylate-functionalized pyrrolidones include ester reaction products of N-2-hydroxyalkylpyrrolidones and acrylic or methacrylic acid. Suitable acrylate-functionalized pyrrolidones also include ester reaction products of N-polyether pyrrolidones and acrylic or methacrylic acid. Examples of these and other useful acrylate-functionalized pyrrolidones appear in U.S. Pat. No. 5,629,359.

Copolymer resins of the invention incorporate one or more allylic monomers. Suitable allylic monomers include allyl esters, allyl ethers, and alkoxylated allylic alcohols.

Allyl esters suitable in the invention preferably have the general structure: CH₂=CR'-CH₂-O-CO-R in which R is hydrogen or a saturated or unsaturated linear, branched, or cyclic C₁-C₃₀ alkyl, aryl, or aralkyl group, and R' is selected from the group consisting of hydrogen and C₁-C₅ alkyl. Suitable allyl esters include, for example, allyl formate, allyl acetate, allyl butyrate, allyl benzoate, methallyl acetate, allyl fatty esters and mixtures thereof. Particularly preferred are allyl esters derived from allyl alcohol and methallyl alcohol. Most preferred are C₁-C₅ alkyl esters of allyl alcohol and methallyl alcohol.

Preferred allyl ethers have the general structure: CH₂=CR'-CH₂-O-R in which R is a saturated linear, branched, or cyclic C₁-C₃₀ alkyl, aryl, or aralkyl group, and R' is selected from the group consisting of hydrogen and C₁-C₅ alkyl. Suitable allyl ethers include, for example, allyl methyl ether, allyl ethyl ether, allyl tert-butyl ether, allyl methylbenzyl ether and mixtures thereof.

The copolymer resin can incorporate recurring units of an alkoxylated allylic alcohol. Preferred alkoxylated allylic alcohols have the general structure CH₂=CR'-CH₂―(A)ₙ―OH in which A is an oxyalkylene group, R' is selected from the group consisting of hydrogen and C₁-C₅ alkyl, and n, which is the average number of oxyalkylene groups in the alkoxylated allylic alcohol, has a value from 1 to 50. Preferred oxyalkylene groups are oxyethylene, oxypropylene, oxybutylenes, and mixtures thereof. Most preferred are propoxylated allylic alcohols having an average of 1 to 10 oxypropylene groups.

Suitable alkoxylated allylic alcohols can be prepared by reacting an allylic alcohol with up to about 50 equivalents of one or more alkylene oxides in the presence of a basic catalyst as described, for example, in U.S. Pat. Nos. 3,268,561 and 4,618,703, As will be apparent to those skilled in the art, suitable alkoxylated allylic alcohols can also be made by acid catalysis, as described, for example, in J. Am. Chem. Soc. 71 (1949) 1152.

The relative amounts of N-alkenyl amide and allylic monomer used to make copolymer resins of the invention depends on many factors, including the desired degree of hydrophilicity, the desired hydroxyl content, the nature of the monomers used, suitability for the particular end-use application, and other factors. Preferably, the copolymer resin comprises from 5 to 95 wt.% of N-alkenyl amide recurring units, and from 5 to 95 wt.% of allylic monomer recurring units. More preferably, the resin comprises from 25 to 75 wt.% of N-alkenyl amide recurring units, and from 25 to 75 wt.% of allylic monomer recurring units. Most preferred resins comprise from 30 to 60 wt.% of N-alkenyl amide recurring units, and from 40 to 70 wt.% of allylic monomer recurring units.

Optionally, the copolymer resin incorporates recurring units derived from one or more ethylenic monomers. The ethylenic monomer is often included to control resin solubility, enhance physical properties, or reduce cost. Preferably, the ethylenic monomer is used in an amount within the range of 0.1 to 50 wt.%. A more preferred range is from 1 to 25 wt.%. Preferred ethylenic monomers include, for example, vinyl aromatic monomers, acrylates and methacrylates, unsaturated nitriles, vinyl esters, vinyl ethers, vinyl halides, vinylidene halides, unsaturated anhydrides, unsaturated dicarboxylic acids, allylic alcohols, acrylic and methacrylic acids, acrylamide and methacrylamide, fluoroalkyl acrylates and methacrylates, conjugated diene and mixtures thereof.

The copolymer resins of the invention preferably have number average molecular weights within the range of 500 to 100,000. A more preferred range is from 2500 to 50,000.

The copolymer resins may have hydroxyl numbers within the range of 0 to 500 mg KOH/g, preferably 0 to 400 mg KOH/g. (In other words, the resins need not have any hydroxyl group content, but may incorporate a substantial proportion of hydroxyl groups.) A preferred range for the hydroxyl number is from 20 to 500 mg KOH/g; a more preferred range is from 25 to 250 mg KOH/g; most preferred is the range from 50 to 200 mg KOH/g. Especially preferred resins have an average hydroxyl functionality within the range of 2 to 10, a number of average molecular weight within the range of 500 to 10,000, and a hydroxyl number within the range of 20 to 500. The need for hydroxyl groups depends on the intended end-use application. In coatings, for example, it is often important for the resin to have a significant hydroxyl group content; in contrast, many composites can benefit from copolymer resins of the invention that contain no hydroxyl groups.

The average hydroxyl functionality of the copolymer resins generally ranges from 0 to 20. Preferably, the hydroxyl functionality is within the range of 2 to 20; most preferred is the range from 3 to 10, especially 3 to 10. As noted above, the need for hydroxyl functionality depends on the desired end use.

In coating applications, glass-transition temperature of the copolymer resin can be important. Copolymer resins of the invention preferably have a glass-transition temperature (T_{g}) within the range of -50°C to 100°C. A more preferred range is from 40°C to 40°C.

The invention includes a process for making the copolymer resins. The process comprises copolymerizing an N-alkenyl amide with an allylic monomer selected from the group consisting of allyl esters, allyl ethers, and alkoxylated allylic alcohols in the presence of a free-radical initiator.

The free-radical initiator is preferably a peroxide, hydroperoxide, or azo compound. Preferred initiators have a decomposition temperature greater than about 100°C. Examples include tert-butyl hydroperoxide, di-tert-butyl peroxide, tert-butyl perbenzoate and cumene hydroperoxide.

The amount of free-radical initiator needed varies, but is generally within the range of 0.1 to 10 wt.% based on the amount of monomers. Preferably, the amount of free-radical initiator used is within the range of 1 to 5 wt.%; most preferred is the range from 2 to 4 wt.%.

Generally, it is preferred to add the free-radical initiator to the reactor gradually during the course of the polymerization. When preparing coating resins, it is also desirable to add the N-alkenyl amide gradually to the reactor, and to match the addition rate of the free-radical initiator to the polymerization rate of the N-alkenyl amide. When an ethylenic monomer is included, it is preferred to add it in proportion to the N-alkenyl amide. For example, if half of the N-alkenyl amide is added gradually, then it is preferred to charge half of the ethylenic monomer initially and add the remaining portion with the N-alkenyl amide. As with the N-alkenyl amide, all of the ethylenic monomer can be added gradually. These techniques produce a polymer that has an evenly distributed hydroxyl functionality that is relatively independent of molecular weight.

A batch process in which all of the monomers are charged initially to the reactor is suitable when the goal is to make copolymer resins for applications in which the distribution of hydroxyl functionality in the resin is less important. In the preferred batch process, the N-alkenyl amide and allylic monomer are charged initially and the free-radical initiator is added gradually as the reaction proceeds.

The process of the invention can be performed over a wide temperature range. Generally, the reaction temperature will be within the range of 60°C to 300°C. A more preferred range is from 90°C to 200°C; most preferred is the range from 100°C to 180°C.

The process of the invention is advantageously performed in the absence of any reaction solvent, but a solvent may be included if desired. Useful solvents include those that will not interfere with the free-radical polymerization reaction or otherwise react with the monomers. Suitable solvents include, for example, ethers, esters, ketones, aromatic and aliphatic hydrocarbons, alcohols, glycol ethers, glycol ether esters, and the like, and mixtures thereof.

An advantage of the process of the invention is that no solvent is needed to polymerize reactive monomers at a low rate of polymerization. This obviates the need to remove a solvent later from the resin and saves on the expense of using and recovering a solvent. The process also gives low molecular weight polymers useful as polymer intermediates without the need to include a chain-transfer agent. Chain-transfer agents often impart undesirable odors and detract from a polymer's ultimate physical properties.

The invention includes thermoset coatings, sealants, elastomers, adhesives, and foams made using hydroxy-functional copolymer resins of the invention. The thermosets include melamines, polyurethanes, epoxy thermosets, polyesters, alkyds, and uralkyds. For example, melamine-based polymers, especially coatings, can be prepared by reacting the copolymer resins with melamine resins. Suitable melamine resins include commercial grade hexamethoxymethylmelamines, such as, for example, CYMEL 303 crosslinking agent, a product of Cytec.

A polyurethane composition is made by reacting a hydroxy-functional copolymer resin of the invention with a di- or polyisocyanate or an isocyanate-terminated prepolymer. Prepolymers derived from the copolymer resins of the invention can be used. Optionally, a low molecular weight chain extender (diol or diamine) is included. Suitable di- or polyisocyanates are those well known in the polyurethane industry, and include, for example, toluene diisocyanate, MDI, polymeric MDIs, carbodiimide-modified MDIs, hydrogenated MDIs, isophorone diisocyanate, and 1,6-hexanediisocyanate, Isocyanate-terminated prepolymers are made in the usual way from a polyisocyanate and a polyether polyol, or polyester polyol. The polyurethane is formulated at any desired NCO index, but it is preferred to use an NCO index close to 1. If desired, all of the available NCO groups are reacted with hydroxy groups from the copolymer resin and any chain extenders. Alternatively, an excess of NCO groups remain in the product, as in a moisture-cured polyurethane. Many types of polyurethane products can be made, including, for example, adhesives, sealants, coatings, and elastomers. Other suitable methods for making polyurethane compositions are described in U.S. Pat. No. 2,965,615.

The invention includes epoxy thermosets, which are the reaction products of hydroxy-functional copolymer resins of the invention and an epoxy resin. Suitable epoxy resins generally have two or more epoxy groups available for reaction with the hydroxyl groups of the copolymer resin. Particularly preferred epoxy resin is phenol-A diglycidyl ether. Other suitable methods for making epoxy thermosets are described in U.S. Pat. No. 4,609,717.

The invention includes thermoset polyesters that are the reaction products of hydroxy-functional copolymer resins of the invention and an anhydride or a di- or polycarboxylic acid. Suitable anhydrides and carboxylic acids are those commonly used in the polyester industry. Examples include phthalic anhydride, phthalic acid, maleic anhydride, maleic acid, adipic acid, isophthalic acid, terephthalic acid, sebacic acid, succinic acid, trimellitic anhydride, and mixtures thereof. Other suitable methods for making thermoset polyesters are described in U.S. Pat. No. 3,457,324.

The invention includes alkyd compositions prepared by reacting a hydroxy-functional copolymer resin of the invention with an unsaturated fatty acid. Suitable unsaturated fatty acids are those known in the art as useful for alkyd resins, and include, for example, oleic acid, ricinoleic acid, linoleic acid, licanic acid, and the like, and mixtures thereof. Mixtures of unsaturated fatty acids and saturated fatty acids such as lauric acid or palmitic acid can also be used. The alkyd resins are particularly useful for making alkyd coatings. For example, a hydroxy-functional copolymer resin, or a mixture of the resin and glycerin or another low molecular weight polyol, is first partially esterified with an unsaturated fatty acid to give an alkyd resin. The resin is then combined with an organic solvent, and the resin solution is stored until needed. A drying agent such as cobalt acetate is added to the solution of alkyd resin, the solution is spread onto a surface, the solvent evaporates, and the resin cures leaving an alkyd coating of the invention. Other suitable methods for making alkyd resins and coatings are described in U.S. Pat. No. 3,423,341.

Instead of combining the alkyd resin with an organic solvent, the resin can be dispersed in water to make a water-based alkyd coating formulation. To improve the water dispersability of the alkyd resin, a free hydroxyl group in the alkyd resin can be converted to a salt. For example, the alkyd resin can be reacted with phthalic anhydride to give a resin that contains phthalic acid residues; addition of sodium hydroxide makes the sodium phthalate salt, and provides a water-dispersable alkyd resin derived from the allyl ester copolymer. See, for example, U.S. Pat. No. 3,483,152.

The invention includes polyurethane-modified alkyds (uralkyds) prepared from hydroxy-functional copolymer resins of the invention. These uralkyd resins are especially valuable for making uralkyd coatings. The hydroxy-functional copolymer resin is first partially esterified with an unsaturated fatty acid (described above) to give an alkyd resin. The alkyd resin, which contains some free hydroxyl groups, is reacted with a di- or polyisocyanate (described above) to give a prepolymer. The prepolymer is then reacted with a chain extender, atmospheric moisture, or additional alkyd resin to give a uralkyd coating. Other suitable methods for making uralkyd resins and coatings are described in U.S. Pat. No. 3,267,058.

Resins of the invention offer valuable advantages for thermosets, including coatings, sealants, elastomers, adhesives, and foams. In coatings, the resins offer oil resistance, enhanced hydrophilicity, and a reduced dependence on salt content for water solubility. These improvements are obtained while maintaining desirable coating appearance and physical properties.

In composites, the resins offer good performance in a less-expensive alternative to commercially available intercalants such as poly(N-vinyl-pyrrolidone). Incorporation of allylic monomers allows formulators to control performance of the intercalant polymer, including bonding efficiency, while minimizing cost.

The following examples merely illustrate the invention.

### EXAMPLE 1

### Copolymer Resin from N-Vinylpyrrolidone and Propoxylated Allyl Alcohol

Allyl alcohol propoxylate (average of 1.6 oxypropylene units, 350 g) is charged to a one-liter reaction kettle equipped with agitator, heating mantle, temperature controller, nitrogen purge device, condenser, and addition pump. N-vinylpyrrolidone (350 g) and t-butyl perbenzoate (10 g) are mixed at 5°C in a chiller, deoxygenated with nitrogen, and charged to the addition pump. After purging the reactor three times with nitrogen, the reactor contents are heated to 145°C. The N-vinylpyrrolidone/initiator mixture is gradually added at an even rate to the reactor over 4 h at 145°C. The mixture is heated for another 45 min. following completion of the monomer addition. Unreacted monomers are removed by vacuum stripping of the mixture at 160°C. The copolymer resin product has M_{w} = 12,600; Mₙ = 3260; and T_{g} = 21°C.

### EXAMPLE 2

### Copolymer Resin from N-Vinylpyrrolidone and Propoxylated Allyl Alcohol

The procedure of Example 1 is followed, but allyl alcohol propoxylate having an average often oxypropylene units (350 g) is used. The polymer has T_{g} = -28°C.

### EXAMPLE 3

### Copolymer Resin from N-Vinylpyrrolidone and Propoxylated Allyl Alcohol

The procedure of Example 1 is followed using 525 g of allyl alcohol propoxylate (ave. of 1.6 oxypropylene units) and 175 g of N-vinylpyrrolidone. The copolymer resin has Mw = 8660; Mn = 1570; and hydroxyl number = 172 mg KOH/g.

### EXAMPLE 4

### Copolymer Resin from N-Vinylpyrrolidone, Propoxylated Allyl Alcohol, and Allyl Alcohol

Allyl alcohol (375 g), allyl alcohol propoxylate (ave. of 1.6 oxypropylene units, 375 g), and N-vinylpyrrolidone (750 g) are charged to a five-liter reaction kettle equipped with agitator, heating mantle, temperature controller, inlets for nitrogen and vacuum, condenser, and addition pump. Di-tert-butyl peroxide (25 g) is charged to the reactor. Additional di-tert-butyl peroxide (50 g) is added to the addition pump. After purging the reactor three times with nitrogen, the reactor contents are heated to 135°C. The initiator is gradually added at a decreasing rate to the reactor over 4 h at 135°C. The initiator addition is performed as follows: first hour, 20 g; second hour, 15 g; third hour, 10 g; fourth hour 5 g. The mixture is heated for another 60 min. following completion of the monomer addition. Unreacted monomers are removed by vacuum stripping of the mixture at 160°C.

## Claims

1. A resin which comprises recurring units of:
(a) an N-alkenyl amide;
(b) an alkoxylated allylic alcohol of the formula CH₂ = CH-CH₂-(A)ₙ-OH in which A is an oxyalkylene group, and n, which is the average number of oxyalkylene groups, has a value within the range 1 to 50; and
(c) optionally, one or more ethylenic monomers selected from the group consisting of vinyl aromatic monomers, acrylates and methacrylates, unsaturated nitriles, vinyl esters, vinyl ethers, vinyl halides, vinylidene halides, unsaturated anhydrides, unsaturated dicarboxylic acids, allylic alcohols, acrylic and methacrylic acids, acrylamide and methacrylamide, fluoroalkyl acrylates and methacrylates, and conjugated dienes.

2. The resin of claim **1** wherein the N-alkenyl amide is an N-vinyl-lactam.

3. The resin of claim **2** wherein the N-vinyl-lactam is selected from the group consisting of N-vinylpyrrolidone and N-vinylcaprolactam.

4. The resin of claim **1** comprising from 5 to 95 wt.% of the N-alkenyl amide, and from 5 to 95 wt.% of the alkoxylated allylic alcohol.

5. The resin of claim **1** comprising from 1 to 50 wt.% of the ethylenic monomer.

6. The resin of claim 1 having a number average molecular weight within the range of 500 to 100,000.

7. The resin of claim **1** having an average hydroxyl functionality within the range of 0 to 20.

8. The resin of claim **1** having a glass-transition temperature within the range of -50°C to 100°C.

9. The resin of claim **1** having a hydroxyl number within the range of 0 mg KOH/g to 500 mg KOH/g.

10. The resin of claim **1** having an average hydroxyl functionality within the range of 2 to 10, a number average molecular weight within the range of 500 to 10,000, and a hydroxyl number within the range of 20 to 500.

11. A thermoset coating, sealant, elastomer, adhesive, or foam which comprises the reaction product of:
(a) the resin of claim **10**; and
(b) a member selected from the group consisting of:
(1) a melamine resin, to produce a melamine thermoset;
(2) a di- or polyisocyanate or an isocyanate-terminated prepolymer, to produce a polyurethane;
(3) an epoxy resin, to produce an epoxy thermoset;
(4) an anhydride, to produce a thermoset polyester;
(5) a fatty acid and a low-molecular-weight polyol, to produce an alkyd; and
(6) a fatty acid, a low-molecular-weight polyol, and a di- or polyisocyanate, to produce a polyurethane-modified alkyd.

12. The resin of claim **1** wherein A is an oxypropylene group.

13. The resin of claim **12** comprising from 5 to 95 wt.% of the N-vinyl-lactam, and from 5 to 95 wt.% of the propoxylated allyl alcohol.

14. The resin of claim **13** wherein the N-vinyl-lactam is N-vinylpyrrolidone.

15. The resin of claim **12** having an average hydroxyl functionality within the range of 2 to 10, a number average molecular weight within the range of 500 to 10,000, and a hydroxyl number within the range of 20 mg KOH/g to 500 mg KOH/g.

16. A process which comprises copolymerizing an N-alkenyl amide with an alkoxylated allylic alcohol of the formula CH₂=CH-CH₂-(A)ₙ-OH in which A is an oxyalkylene group, and n, which is the average number of oxyalkylene groups, has a value within the range 1 to 50, in the presence of a free-radical initiator.

17. The process of claim **16** performed at a temperature within the range of 90°C to 200°C.

18. The process of claim **16** wherein the N-alkenyl amide is an N-vinyl-lactam.

19. The process of claim **18** wherein the N-vinyl-lactam is selected from the group consisting of N-vinylpyrrolidone and N-vinylcaprolactam.

20. The process of claim **16** wherein the resin has an average hydroxyl functionality within the range of 2 to 10, a number average molecular weight within the range of 500 to 10,000, and a hydroxyl number within the range of 20 to 500.

21. A resin which comprises recurring units of:
(a) an acrylate-functionalized pyrrolidone;
(b) one or more allylic monomers selected from the group consisting of allyl esters, allyl ethers, and alkoxylated allylic alcohols; and
(c) optionally, one or more ethylenic monomers selected from the group consisting of vinyl aromatic monomers, acrylates and methacrylates, unsaturated nitriles, vinyl esters, vinyl ethers, vinyl halides, vinylidene halides, unsaturated anhydrides, unsaturated dicarboxylic acids, allylic alcohols, acrylic and methacrylic acids, acrylamide and methacrylamide, fluoroalkyl acrylates and methacrylates, and conjugated dienes.

22. The resin of claim **21** wherein the acrylate-functionalized pyrrolidone is an acrylate ester derived from an N-2-hydroxyalkyl pyrrolidone.

23. The resin of claim **21** wherein the acrylate-functionalized pyrrolidone is an acrylate ester derived from an N-polyether pyrrolidone.

## Revendications

1. Résine comprenant des unités récurrentes
(A) d'un N-alcényle amide;
(b) d'un alcool allylique alcoxylé dont la formule est CH₂=CH-CH₂-(A)ₙ-OH dans laquelle A est un groupe oxyalkylène, et n, qui est le nombre moyen de groupes oxyalkylènes, est situé dans le domaine de 1 à 50 ; et
(c) facultativement, d'un ou plusieurs monomères éthyléniques choisis dans le groupe constitué par les monomères aromatiques vinyliques, les acrylates et les méthacrylates, les nitriles insaturés, les esters vinyliques, les éthers vinyliques, les halogénures vinyliques, les halogénures de vinylidène, les anhydrides insaturés, les acides dicarboxyliques insaturés, les alcools allyliques, les acides acryliques et méthacryliques, l'acrylamide et le méthacrylamide, les acrylates et les méthacrylates fluoroalkyliques, et les diènes conjugués.

2. Résine selon la revendication 1 dans laquelle le N-alcényle amide est un N-vinyle-lactame.

3. Résine selon la revendication 2 dans laquelle le N-vinyle-lactame est choisi dans le groupe constitué par la N-vinylpyrrolidone et le N-vinylcaprolactame.

4. Résine selon la revendication 1 comprenant de 5 à 95 % en poids du N-alcényle amide, et de 5 à 95 % en poids de l'alcool allylique alcoxylé.

5. Résine selon la revendication 1 comprenant de 1 à 50 % en poids du monomère éthylénique.

6. Résine selon la revendication 1 ayant un poids moléculaire moyen en nombre situé dans le domaine de 500 à 100000.

7. Résine selon la revendication 1 ayant une fonctionnalité d'hydroxyle située dans le domaine de 0 à 20.

8. Résine selon la revendication 1 ayant une température de transition vitreuse située dans le domaine de -50°C à 100°C.

9. Résine selon la revendication 1 ayant un indice d'hydroxyle situé dans le domaine de 0 mg KOH/g à 500 mg KOH/g.

10. Résine selon la revendication 1 ayant une fonctionnalité d'hydroxyle moyenne située dans la domaine de 2 à 10, un poids moléculaire moyen en nombre situé dans le domaine de 500 à 10000, et un indice d'hydroxyle situé dans le domaine de 20 à 500.

11. Revêtement thermodurci, d'étanchéité, élastomère, adhésif, ou plastique alvéolaire comprenant le produit de réaction de :
(a) la résine selon la revendication 10 ; et
(b) un membre choisi dans le groupe constitué par :
(1) une résine de mélamine, afin de produire un thermodurcissable de mélamine ;
(2) un prépolymère à terminaison diisocyanate, polyisocyanate ou isocyanate, afin de produire un polyuréthane ;
(3) une résine époxy, afin de produire un thermodurcissable d'époxy ;
(4) un anhydride, afin de produire un polyester thermodurci ;
(5) un acide gras et un polyol de bas poids moléculaire, afin de produire un alkyde ; et
(6) un acide gras, un polyol de bas poids moléculaire, et un diisocyanate ou un polyisocyanate, afin de produire un alkyde polyuréthane modifié.

12. Résine selon la revendication 1 dans laquelle A est un groupe oxypropylène.

13. Résine selon la revendication 12 comprenant de 5 à 95 % en poids du N-vinyle-lactame, et de 5 à 95 % en poids de l'alcool allylique propoxylé.

14. Résine selon la revendication 13 dans laquelle le N-vinyle-lactame est la N-vinylpyrrolidone.

15. Résine selon la revendication 12 ayant une fonctionnalité d'hydroxyle moyenne située dans le domaine de 2 à 10, un poids moléculaire moyen en nombre situé dans le domaine de 500 à 10000, et un indice d'hydroxyle situé dans le domaine de 20 mg KOH/g à 500 mg KOH/g.

16. Procédé comprenant la copolymérisation d'un N-alcényle amide avec un alcool allylique alcoxylé dont la formule est CH₂=CH-CH₂-(A)ₙ-OH dans laquelle A est un groupe oxyalkylène, et n, qui est le nombre moyen de groupes oxyalkylènes, a une valeur située dans le domaine de 1 à 50, en présence d'un initiateur à radicaux libres.

17. Procédé selon la revendication 16 réalisé à une température située dans le domaine de 90°C à 200°C.

18. Procédé selon la revendication 16 dans lequel le N-alcényle amide est un N-vinyle-lactame.

19. Procédé selon la revendication 18 dans lequel le N-vinyle-lactame est choisi dans le groupe constitué par la N-vinylpyrrolidone et le N-vinylcaprolactame.

20. Procédé selon la revendication 16 dans lequel la résine présente une fonctionnalité d'hydroxyle moyenne située dans le domaine de 2 à 10, un poids moléculaire moyen en nombre situé dans le domaine de 500 à 10000, et un indice d'hydroxyle situé dans le domaine de 20 à 500.

21. Résine comprenant des unités récurrentes
(a) d'une pyrrolidone fonctionnalisée par un groupement acrylate ;
(b) d'un ou plusieurs monomères d'allyle choisis dans le groupe constitué par les esters d'allyle, les éthers d'allyle, et les alcools allyliques alcoxylés ; et
(c) facultativement, d'un ou plusieurs monomères éthyléniques choisis dans le groupe constitué par les monomères aromatiques de vinyle, les acrylates et les méthacrylates, les nitriles insaturés, les esters de vinyle, les éthers de vinyle, les halogénures de vinyle, les halogénures de vinylidène, les anhydrides insaturés, les acides dicarboxyliques insaturés, les alcools allyliques, les acides acryliques et méthacryliques, l'acrylamide et le méthacrylamide, les acrylates et les méthacrylates de fluoroalkyle, et les diènes conjugués.

22. Résine selon la revendication 21 dans laquelle la pyrrolidone fonctionnalisée par un groupement acrylate est un ester d'acrylate dérivé d'une N-2-hydroxyalkylpyrrolidone.

23. Résine selon la revendication 21 dans laquelle la pyrrolidone fonctionnalisée par un groupement acrylate est un ester d'acrylate dérivé d'une N-polyéther-pyrrolidone.

## Patentansprüche

1. Harz, das wiederkehrende Einheiten umfasst von:
(a) einem N-Alkenylamid;
(b) einem alkoxylierten Allylalkohol der Formel CH₂ = CH-CH₂-(A)ₙ-OH, worin A eine Alkylenoxidgruppe ist und n, das die mittlere Anzahl der Alkylenoxidgruppen ist, einen Wert im Bereich von 1 bis 50 aufweist; und
(c) wahlweise einem oder mehreren ethylenischen Monomeren, ausgewählt aus der Gruppe, bestehend aus vinylaromatischen Monomeren, Acrylaten und Methacrylaten, ungesättigten Nitrilen, Vinylestern, Vinylethern, Vinylhaliden, Vinylidenhaliden, ungesättigten,Anhydriden, ungesättigten Dicarbonsäuren, Allylalkoholen, Acryl- und Methacrylsäuren, Acrylamid und Methacrylamid, Fluoralkylacrylaten und -methacrylaten und konjugierten Dienen.

2. Harz nach Anspruch 1, worin das N-Alkenylamid ein N-Vinyllactam ist.

3. Harz nach Anspruch 2, worin das N-Vinyllactam ausgewählt ist aus der Gruppe, bestehend aus N-Vinylpyrrolidon und N-Vinylcaprolactam.

4. Harz nach Anspruch 1, umfassend von 5 bis 95 Gew.-% des N-Alkenylamids und von 5 bis 95 Gew.-% des alkoxylierten Allylalkohols.

5. Harz nach Anspruch 1, umfassend von 1 bis 50 Gew.-% des ethylenischen Monomeren.

6. Harz nach Anspruch 1 mit einem Molekulargewichtszahlenmittel im Bereich von 500 bis 100.000.

7. Harz nach Anspruch 1 mit einer mittleren Hydroxylfunktionalität im Bereich von 0 bis 20.

8. Harz nach Anspruch 1 mit einer Glasübergangstemperatur im Bereich von -50 °C bis 100 °C.

9. Harz nach Anspruch 1 mit einer Hydroxylzahl im Bereich von 0 mg KOH/g bis 500 mg KOH/g.

10. Harz nach Anspruch 1 mit einer mittleren Hydroxylfunktionalität im Bereich von 2 bis 10, einem Molekulargewichtszahlenmittel im Bereich von 500 bis 10.000 und einer Hydroxylzahl im Bereich von 20 bis 500.

11. Wärmehärtbare Beschichtung, Dichtungsmittel, Elastomer, Adhäsiv oder Schaum, umfassend das Reaktionsprodukt:
(a) des Harzes gemäß Anspruch 10; und
(b) einem Element, ausgewählt aus der Gruppe, bestehend aus:
(1) einem Melaminharz zur Erzeugung eines Melamin-Thermosets;
(2) einem Di- oder Polyisocyanat oder einem Prepolymeren mit Isocyanat-Enden, zur Erzeugung eines Polyurethans;
(3) einem Epoxyharz zur Erzeugung eines Epoxy-Thermosets;
(4) einem Anhydrid zur Erzeugung eines wärmehärtbaren Polyesters;
(5) einer Fettsäure und einem Polyol mit niedrigem Molekulargewicht zur Erzeugung eines Alkyds; und
(6) einer Fettsäure, einem Polyol mit niedrigem Molekulargewicht und einem Di- oder Polyisocyanat zur Erzeugung eines polyurethanmodifizierten Alkyds.

12. Harz nach Anspruch 1, worin A eine Propylenoxidgruppe ist.

13. Harz nach Anspruch 12, umfassend von 5 bis 95 Gew.-% des N-Vinyllactams und von 5 bis 95 Gew.-% des propoxylierten Allylalkohols.

14. Harz nach Anspruch 13, worin das N-Vinyllactam N-Vinylpyrrolidon ist.

15. Harz nach Anspruch 12 mit einer mittleren Hydroxylfunktionalität im Bereich von 2 bis 10, einem Molekulargewichtszahlenmittel im Bereich von 500 bis 10.000 und einer Hydroxylzahl im Bereich von 20 mg KOH/g bis 500 mg KOH/g.

16. Verfahren, das die Copolymerisation eines N-Alkenylamids mit einem alkoxylierten Allylalkohol der Formel CH₂ = CH-CH₂-(A)ₙ-OH umfasst, worin A eine Alkylenoxidgruppe ist und n, das die mittlere Anzahl der Alkylenoxidgruppen ist, einen Wert im Bereich von 1 bis 50 aufweist, in Anwesenheit eines freien Radikalstarters.

17. Verfahren nach Anspruch 16, durchgeführt bei einer Temperatur im Bereich von 90 °C bis 200 °C.

18. Verfahren nach Anspruch 16, worin das N-Alkenylamid ein N-Vinyllactam ist.

19. Verfahren nach Anspruch 18, worin das N-Vinyllactam ausgewählt ist aus der Gruppe, bestehend aus N-Vinylpyrrolidon und N-Vinylcaprolactam.

20. Verfahren nach Anspruch 16, worin das Harz eine mittlere Hydroxylfunktionalität im Bereich von 2 bis 10, ein Molekulargewichtszahlenmittel im Bereich von 500 bis 10.000 und eine Hydroxylzahl im Bereich von 20 bis 500 aufweist.

21. Harz, das wiederkehrende Einheiten umfasst von:
(a) einem Acrylat-funktionalisierten Pyrrolidon;
(b) einem oder mehreren allylischen Monomeren, ausgewählt aus der Gruppe, bestehend aus Allylestern, Allylethern und alkoxylierten Allylalkoholen; und
(c) wahlweise einem oder mehreren ethylenischen Monomeren, ausgewählt aus der Gruppe, bestehend aus vinylaromatischen Monomeren, Acrylaten und Methacrylaten, ungesättigten Nitrilen, Vinylestern, Vinylethern, Vinylhaliden, Vinylidenhaliden, ungesättigten Anhydriden, ungesättigten Dicarbonsäuren, Allylalkoholen, Acryl- und Methacrylsäuren, Acrylamid und Methacrylamid, Fluoralkylacrylaten und -methacrylaten und konjugierten Dienen.

22. Harz gemäß Anspruch 21, worin das Acrylat-funktionalisierte Pyrrolidon ein Acrylatester ist, abgeleitet von einem N-2-Hydroxyalkylpyrrolidon.

23. Harz gemäß Anspruch 21, worin das mit Acrylat-Funktionalisierte Pyrrolidon ein Acrylatester ist, abgeleitet von einem N-Polyetherpyrrolidon.
